**Europäisches Patentamt**

**European Patent Office**

**Office européen des brevets**

(19)

(11) Veröffentlichungsnummer : **0 073 892**
**B1**

(12)                     **EUROPÄISCHE PATENTSCHRIFT**

(45) Veröffentlichungstag der Patentschriff :
**15.05.85**

(51) Int. Cl.⁴ : **F 16 L 41/00, F 16 L 47/00,**
**H 02 G 3/06**

(21) Anmeldenummer : **82105897.1**

(22) Anmeldetag : **02.07.82**

(54) **Anschlussnippel für umfangsgerippte Isollerrohre.**

(30) Priorität : **07.09.81 CH 5748/81**

(43) Veröffentlichungstag der Anmeldung :
**16.03.83 Patentblatt 83/11**

(45) Bekanntmachung des Hinweises auf die Patenterteilung : **15.05.85 Patentblatt 85/20**

(84) Benannte Vertragsstaaten :
**AT BE DE FR GB IT NL SE**

(56) Entgegenhaltungen :
**AT-B- 335 001**
**GB-A- 12 860**

(73) Patentinhaber : **Grossauer, Alfred**
**Korbackerweg 7**
**CH-5502 Hunzenschwil (CH)**

(72) Erfinder : **Grossauer, Alfred**
**Korbackerweg 7**
**CH-5502 Hunzenschwil (CH)**

(74) Vertreter : **Willi, Anton, J.**
**Alsenmattstrasse 2**
**CH-8800 Thalwil (CH)**

**Beschreibung**

Gegenstand der Erfindung ist ein Anschlussnippel für umfangsgerippte Isolierrohre nach dem Oberbegriff des Anspruches 1, wie beispielsweise in der AT-B-335.001 beschrieben.

Die relativ dünnwandigen Isolierrohre, welche bekanntlich der Aufnahme elektrischer Kabel dienen, müssen zum Anschluss an Elektrogeräte mit einem Nippel versehen werden, der einerends einen Gewindestutzen zum Befestigen an der Gehäusewand des Gerätes und andernends einen Aufnahmestutzen für das Ende des Isolierrohres aufweist. Solche, meist aus Kunststoff bestehende Nippel, sollten eine ohne Werkzeug nicht mehr lösbare Verbindung mit dem Isolierrohr ermöglichen, was bisher nur mit relativ grossem Aufwand möglich war.

Die vorliegende Erfindung bezweckt nun die Schaffung eines Nippels der genannten Art, der das Verbinden mit dem umfangsgerippten Isolierrohr durch einfache Handgriffe und ohne Werkzeug ermöglicht, während das Trennen des Nippels vom Rohr ohne geeignetes Werkzeug nicht zu bewerkstelligen ist.

Zu diesem Zweck ist der erfindungsgemässe Nippel, der ein innen abgesetztes Rohrstück aufweist, das einerends einen Gewindestutzen und andernends einen Aufnahmestutzen für das Isolierrohr besitzt der in einer Wandausnehmung ein Sicherungselement trägt, dadurch gekennzeichnet, dass das Sicherungselement mindestens einen zum Eingriff in eine Umfangsrinne des Isolierrohres bestimmten Vorsprung aufweist, und von Hand in eine Wirkungslage drückbar ist, in der sein Vorsprung radial in die Stutzenbohrung hineinragt und durch nur mittels Werkzeug lösbarem Kraft- oder Formschluss gehalten ist.

Das zweckmässig ebenso wie das Rohrstück aus Kunststoff bestehende Sicherungselement kann als radial einpressbarer und in seiner Wirkungslage in der Stutzenwand versenkt liegender Druckknopf oder Federarm ausgebildet sein ; auch tangential in Ausnehmungen des Stutzens eindrückbare Schieber können als Sicherungselement vorgesehen sein.

Ausführungsbeispiele der Erfindung sind in der beiliegenden Zeichnung dargestellt ; darin zeigt :

Figur 1 im Querschnitt einen Anschlussnippel mit Druckknopf-Sicherungselement,

Figuren 2 und 3 im Axialschnitt eine Einzelheit aus Fig. 1, das Sicherungselement ausser bzw. in Wirkungslage zeigend,

Figur 4 im Querschnitt einen Anschlussnippel mit Schwenkarm-Sicherungselement ausser Wirkungslage,

Figur 5 eine Draufsicht zu Fig. 4,

Figur 6 einen Schnitt analog Fig. 4, das Sicherungselement in Wirkungslage zeigend,

Figur 7 einen Achsialschnitt nach der Linie VII-VII in Fig. 4 mit eingesetztem Isolierrohr,

Figur 8 im Querschnitt ein drittes Beispiel eines Nippels ohne eingesetztes Sicherungselement,

Figur 9 einen Achsialschnitt durch den Nippel nach Fig. 8 bei in Wirkungslage befindlichem Sicherungselement und eingesetztem Isolierrohr,

Figur 10 einen Schnitt analog Fig. 8 beim Einsetzen des Sicherungselementes,

Figuren 11 und 12 einen Achsialschnitt durch bzw. eine Draufsicht auf das Rohrstück des Nippels nach Fig. 8, und

Figur 13 eine Draufsicht auf das Sicherungselement des Nippels nach Fig. 8 bis 12.

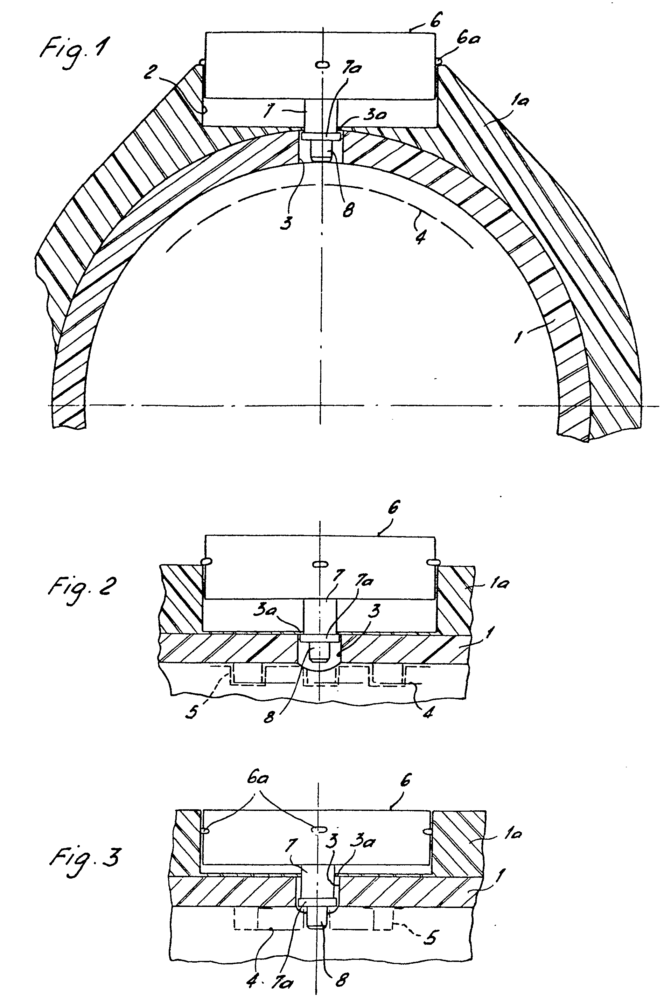

Beim Beispiel nach Fig. 1 bis 3 ist der Aufnahmestutzen des Rohrstücks (dessen Gewindestutzen nicht gezeichnet ist) mit 1 bezeichnet und in seinem Längsmittelbereich mit einer Aussenwulst la versehen. In diesem Wulst la ist eine z. B. etwa quadratischen oder kreisförmigen Grundriss aufweisende Ausnehmung 2 vorgesehen ; in der Mitte dieser bis zum Grund des Wulstes la reichenden Ausnehmung 2 ist eine Radialbohrung 3 durch die Stutzenwand vorgesehen. Mit 4 ist die Lage des Nutgrundes eines vom Stutzen 1 aufzunehmenden umfangsgerippten bei 5 angedeuteten Isolierrohres bezeichnet. Der Uebergang von der Ausnehmung 2 in die Radialbohrung 3 ist durch eine überstehende Lippe 3a etwas verengt. Eine Druckplatte 6 des Sicherungselementes, die in dessen unwirksamer Lage etwa zur Hälfte ihrer Höhe in die Ausnehmung 2 hineinragt, ist mit einem Bolzen 7 versehen, der mit einem Bund 7a die Lippe 3a untergreift und in einem Zapfen 8 endet. In der in Fig. 1 und 2 gezeigten unwirksamen Lage des Sicherungselementes liegt der Zapfen 8 vollständig innerhalb der Wandstärke des Stutzens 1. Nun wird das in die Stutzenbohrung passende umfangsgerippte Isolierrohr 5 in den Aufnahmestutzen 1 eingeschoben, und zwar so, dass eine der zwischen zwei Umfangsrippen des Rohres liegende Nut in den Bereich der Wandbohrung 3 zu liegen kommt. Es genügt nun ein Fingerdruck auf die Druckplatte 6, um diese bis zur Bündigkeit mit der Wulstaussenseite in die Ausnehmung 2 abzusenken. Umfangsnocken 6a oder Rippen, die vorher ein unerwünschtes Hineinfallen der Druckplatte 6 in die Ausnehmung 2 verhindert haben, wirken dabei als Klemmorgane, die ein erneutes Herausnehmen der Druckplatte 6 aus der Ausnehmung 2 von Hand verunmöglichen. Mit dem Eindrücken der Druckplatte 6 wird der Zapfen 8 in die darunter liegende Umfangsnut des Isolierrohres eingedrückt, wodurch dieses einwandfrei gegen axiales Trennen vom Isolierrohr und Nippel verunmöglicht ist. Es versteht sich, dass dieses als Druckknopf ausgebildete Sicherungselement auch mit mehreren von an der Druckplatte 6 angeordneten Bolzen 7 getragenen Zapfen 8 versehen sein könnte, die je in eine Umfangsnut des Isolierrohres eingreifen können.

Ein anderes durch radialen Fingerdruck in Wirkungslage bringbares und ohne Werkzeug nicht mehr lösbares Sicherungselement ist beim Beispiel nach Fig. 4 bis 7 gezeigt. Auch hier besitzt das Rohrstück des Nippels neben einem nicht gezeigten Gewindestutzen einen Aufnahmestutzen 10 mit Umfangswulst 10a. Wulst 10a und Stutzen 10 besitzen je eine im Grundriss rechteckförmige Ausnehmung 11a und 11. Am Wulst 10a ist am einen Umfangsende der Ausnehmungen ein die Stutzenwand übergreifender Steg 12 und am andern Umfangsende der Ausnehmungen eine abgesetzte, ebenfalls die Stutzenwand übergreifende Zunge 13 gebildet. Die im Bereich des Steges 12 liegende Begrenzungswand der Ausnehmung 11 ist unter Bildung einer Hinterschneidung 14 in Radialrichtung abgesetzt. In diese Hinterschneidung 14 greift eine Endnase 15a eines bogenförmigen Sicherungsarmes 15, der den Ausnehmungen 11, 11a folgend, in einer verdickten Druckpartie 15b endet. Diese Druckpartie 15b besitzt eine radial innere, die Zunge 13 des Wulstes 10a untergreifende Nase 16, an die sich eine Rampe 17a mit Absetzung 17b anschliesst; radial aussen besitzt die Druckpartie 15b zwei die Zunge 13 des Wulstes 10a übergreifende, durch einen im Bereich der Nase 16 liegenden Ausschnitt getrennte Randzungen 18. Die radiale Dicke der Druckpartie 15b entspricht der radialen Dicke von Wulst und Stutzenwand. Die Innenseite der Druckpartie 15b des Sicherungsarmes 15 ist mit zwei (es könnten auch mehrere sein) in Umfangsrichtung des Stutzens verlaufende und in ihrer Breite und Höhe sowie im gegenseitigen Abstand den Abmessungen der Umfangsnuten des im Stutzen 10a aufzunehmenden umfangsgerippten Isolierrohres 19 (Fig. 7) angepasste Rippen 20 versehen.

Die Wirkungsweise des mit den zwei Rippen 20 versehenen Sicherungselementes ist aus den Fig. 4, 6 und 7 ohne weiteres erkennbar. In der unwirksamen Lage des Sicherungselementes (Fig. 4 und 7) liegen die Rippen 20 vollständig ausserhalb der lichten Weite des Stutzens 10, so dass das passende Isolierrohr 19 ungehindert eingeschoben werden kann. Durch Niederdrücken der Druckpartie 15b wird das Sicherungselement 15 um seine durch die Hinterschneidung 14 gebildete Lagerstelle einwärts verschwenkt, so dass die Rippen 20 in darunter befindliche Nuten des Isolierrohres 19 eingreifen können. Dabei gleitet die Rampe 17a unter die Zunge 13, bis letztere auf der Absetzung 17b aufliegt und somit ein erneutes Hochschwenken des Sicherungselementes verhindert (Fig. 6). Nur durch Ansetzen eines Werkzeugs im Spalt 18a zwischen Wulst 10a und Zunge 18 könnte das Sicherungselement 15 wieder aus seiner durch das Zusammenwirken von Zunge 13 und Absetzung 17b gesicherten Wirkunslage gelöst werden.

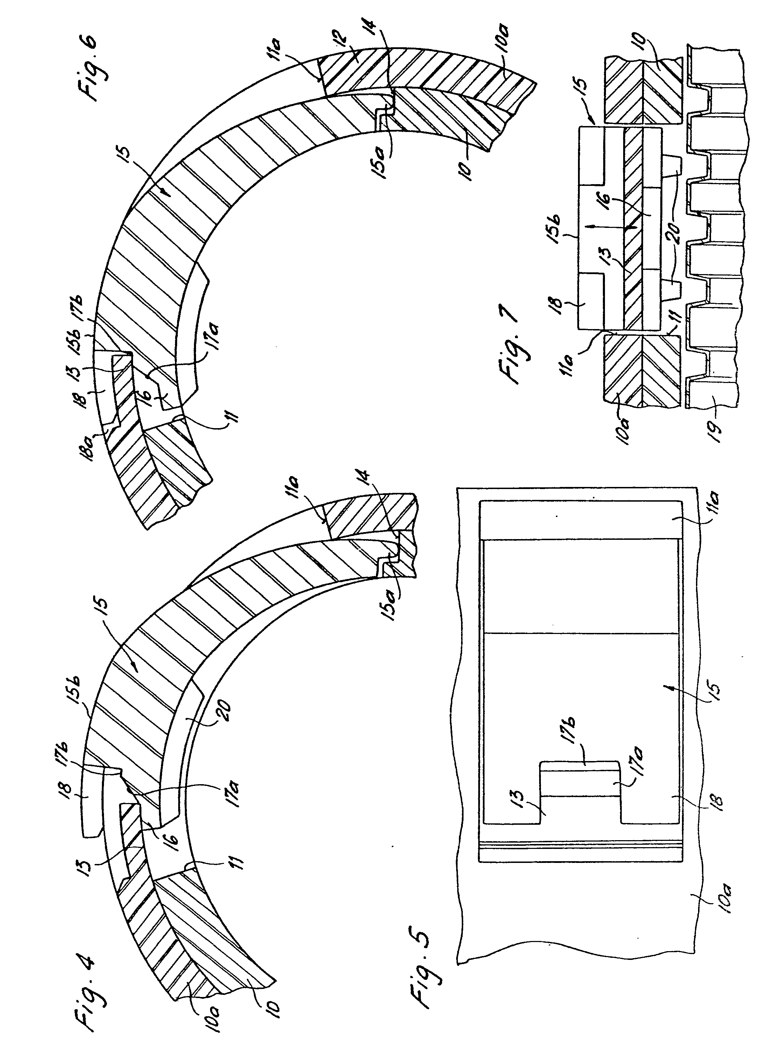

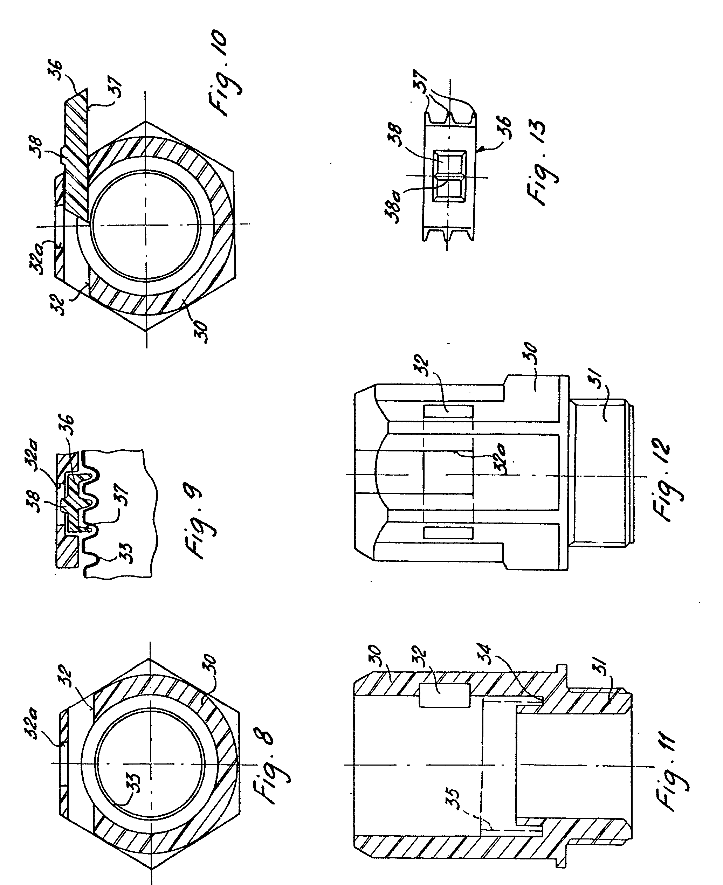

Ein weiteres Beispiel ist in den Fig. 8 bis 13 gezeigt. Der mit einem 6-Kant versehene Aufnahmestutzen 30 des andernends einen Gewindestutzen 31 aufweisenden Kunststoff-Rohrstücks ist mit einer tangentialen Ausnehmung 32 versehen, die mittig mit der Bohrung des Aufnahmestutzens 30 verbunden und durch eine Wandöffnung 32a zusätzlich nach aussen hin offen ist. Die Ausnehmung 32 ist so angelegt, dass sie die Innenbohrung des Stutzens 30 um die radiale Tiefe der Nuten des zur Aufnahme vorgesehenen Isolierrohres 33 (Fig. 9) anschneidet. Am Uebergang der Bohrung des Aufnahmestutzens 30 zur engeren Bohrung des Gewindestutzens 31 ist eine nach dem Aufnahmestutzen hin offene Umfangsrinne 34 geschaffen, in der, wie in Fig. 11 angedeutet, ein Dichtungsring 35 abgestützt ist, gegen welchen das Isolierrohr 33 anliegen kann. Das Sicherungselement ist in diesem Fall ein Kunststoff-Schieber 36. Dieser Schieber 36, dessen Unterseite mit drei Längsrippen 37 versehen ist, passt in die Ausnehmung 32 des Aufnahmestutzens 30. Ein an der Schieberoberseite überstehender Nocken 38 erschwert zwar etwas das Einschieben des Schiebers 36 in die Ausnehmung 32 (Fig. 10), macht es aber dank der Elastizität des Kunststoffs ohne weiteres von Hand möglich. Es versteht sich, dass auch hier die drei Rippen 37 des Schiebers 36 in Höhe, Breite und gegenseitigem Abstand den entsprechenden Abmessungen des Isolierrohres 33 angepasst sind, so dass das eingesetzte Isolierrohr nach dem Einschieben des Schiebers 36 gegen achsiales Trennen vom Nippel einwandfrei gesichert ist. Der Nocken 38, der beim Einschieben des Schiebers 36 in seine Wirkungslage in der Oeffnung 32a liegt, verhindert einwandfrei ein Herausnehmen des Schiebers von Hand. Um aber den Schieber 36 bei Bedarf wieder entfernen zu können, ist der Nocken 38 mit einem Einschnitt 38a versehen, an welchem ein Werkzeug, z. B. ein Schraubenzieher, angesetzt werden kann; so ist es möglich, den Schieber 36 trotz überstehendem Nocken 38 aus der Ausnehmung 32 herauszudrücken.

Um einen dichten Anschluss des Isolierrohres 33 am Nippel zu gewährleisten, ist wie erwähnt, ein elastischer Dichtungsring 35 vorgesehen. Die axiale Länge dieses Ringes ist dabei so gewählt, dass beim Anstossen des Isolierrohres am Dichtungsring 35 die Umfangsnuten des Isolierrohres bezüglich der Lage der Rippen 37 des einzusetzenden Sicherungsschiebers 36 achsial, z. B. um die halbe Nutbreite, versetzt sind; durch entsprechendes Einwärtsdrücken des Rohres gegen den elastisch nachgiebigen Dichtungsring 35 können die Umfangsnuten des Rohres in ihre für den Eingriff der Rippen 20 des Schiebers 36 richtige Lage gebracht werden. Der eingesetzte Schieber 36 sichert so nicht nur das Isolierrohr im Nippel, sondern gewährleistet damit auch die Aufrechterhaltung einer dichten Verbindung zwischen Isolierrohr und Nippel.

## Patentansprüche

1. Anschlussnippel für umfangsgerippte Isolierrohre, der ein Kunststoff-Rohrstück aufweist, das einerends einen Gewindestutzen und andernends einen Aufnahmestutzen (1, 10, 30) für das Isolierrohr (5, 19, 33) aufweist, der in einer Wandausnehmung ein Sicherungselement (6, 7, 8 bzw. 15, bzw. 36) trägt, dadurch gekennzeichnet, dass das Sicherungselement (6, 7, 8 bzw. 15 bzw. 36) mindestens einen zum Eingriff in eine Umfangsrinne des Isolierrohres bestimmten Vorsprung (8 bzw. 20 bzw. 37) aufweist, und von Hand in eine Wirkungslage drückbar ist, in der sein Vorsprung radial in die Stutzenbohrung hineinragt und durch nur mittels Werkzeug lösbarem Kraft- oder Formschluss gehalten ist.

2. Anschlussnippel nach Anspruch 1, dadurch gekennzeichnet, dass das Sicherungselement ein Druckknopf (6, 7, 8) ist, der aus einer unwirksamen Lage, in welcher ein am Ende eines an einer Druckplatte (6) vorgesehenen Bolzens (7) angeordneter Zapfen (8) innerhalb der Wanddicke des Aufnahmestutzens (1) liegt, radial einwärts in seine Wirkungslage drückbar ist, in welcher er durch Klemmnocken (6a) an der Druckplatte (6) kraftschlüssig gehalten ist.

3. Anschlussnippel nach Anspruch 2, dadurch gekennzeichnet, dass der Druckknopf (6, 7, 8) in seiner unwirksamen Lage durch einen am Bolzen (7) vorgesehenen Bund (7a), der eine überstehende Lippe (3a) der den Druckknopf aufnehmenden Stutzenwandbohrung untergreift, gegen Herausfallen gesichert ist.

4. Anschlussnippel nach Anspruch 1, dadurch gekennzeichnet, dass das Sicherungselement ein in einer Umfangsausnehmung (11, 11a) des Aufnahmestutzens (10, 10a) schwenkbar gelagerter bogenförmiger Sicherungsarm (15) ist, der um seine Lagerstelle (14) aus seiner unwirksamen in seine wirksame Lage drückbar ist, in welcher an der Innenseite des Armes vorgesehene Umfangsrippen (20) in die lichte Weite des Aufnahmestutzens hineinragen.

5. Anschlussnippel nach Anspruch 4, dadurch gekennzeichnet, dass die mit den Rippen (20) versehene Druckpartie (15b) des Sicherungsarmes (15) in dessen Wirkungslage mit einer Absetzung (17b) eine am Aufnahmestutzen vorgesehene Zunge (13) untergreift und damit in dieser Lage gesichert ist.

6. Anschlussnippel nach Anspruch 1, dadurch gekennzeichnet, dass das Sicherungselement ein innen mit Längsrippen (37) versehener Kunststoff-Schieber (36) ist, der von Hand tangential in eine Wandausnehmung (32) des Aufnahmestutzens (30) einschiebbar ist, wobei in seiner eingeschobenen Wirkungslage die Rippen (37) in die lichte Weite des Aufnahmestutzens (30) hineinragen, während ein durch eine Wandöffnung (32a) des Aufnahmestutzens zugänglicher überstehender Nocken (38) des Schiebers (36) dessen Herausnehmen aus der Wandausnehmung (32) nur mittels Werkzeug ermöglicht.

7. Anschlussnippel nach Anspruch 6, dadurch gekennzeichnet, dass am inneren Ende der Bohrung des Aufnahmestutzens (30) eine Umfangsrinne (34) vorgesehen ist, in der ein Dichtungsring (35) abgestützt ist, dessen achsiale Länge so gewählt ist, dass er beim Eingriff der Schieberrippen (37) in Umfangsnuten des Isolierrohres dichtend unter Druckspannung steht.

## Claims

1. Connector fitting for peripherally finned insulating tubes which has a plastics material pipe element comprising a screw-threaded connector at one extremity and a receiving connector (1, 10, 30) at the other extremity for the insulating tube (5, 19, 33) which carries a securing element (6, 7, 8 or 15 or 36 respectively) in a wall recess, characterised in that the securing element (6, 7, 8 or 15 or 36 respectively) has at least one projection (8, or 30 or 27 respectively) intended to engage in a peripheral groove of the insulating tube, and may be thrust by hand into an effective position in which its projection extends radially into the connector bore and is held in a force-locked or form-locked manner releasable only by means of a tool.

2. Connector fitting according to claim 1, characterised in that the securing element is a press stud (6, 7, 8) which may be pressed out of an ineffective position in which a peg (8) provided at the extremity of a bolt (7) situated on a thrust plate (6) lies within the wall thickness of the receiving connector (1), and radially inwards into its effective position in which it is held on the thrust plate (6) in a force-locked manner by means of gripping pins (6a).

3. Connector fitting according to claim 2, characterised in that the press stud (6, 7, 8) is secured against dropping out in its ineffective position by means of a flange (7a) situated on the bolt (7) which engages under a projecting lip (3a) of the connector wall bore receiving the press stud.

4. Connector fitting according to claim 1, characterised in that the securing element in an arcuate securing lever (15) pivotally mounted in a peripheral recess (11, 11a) of the receiving connector (10, 10a), which may be pushed around its mounting point (14) from its ineffective into its effective position, in which peripheral fins (20) provided on the inner side of the level project into the unobstructed aperture of the receiving connector.

5. Connector fitting according to claim 4, characterised in that the thrust portion (15b) of the securing lever (15) engages, in the effective position of the latter, with a step (17b) beneath a tongue (13) provided on the receiving connector and is thereby secured in this position.

6. Connector fitting according to claim 1, characterised in that the securing element is a plastics material slider (36) equipped internally with longitudinal fins (37), which may be inserted manually and tangentially into a wall recess (32) of the receiving connector (30), the fins (37) projecting into the aperture of the receiving connector (30) in its effective inserted position, whereas a boss (38) of the slider (36), which is accessible *via* a wall opening (32a) of the receiving connector allows of removal of said slider from the wall recess (32) only by means of a tool.

7. Connector fitting according to claim 6, characterised in that a peripheral groove (34) is provided at the inner extremity of the bore of the receiving connector (30), wherein a sealing ring (35) is supported, whereof the axial length is so selected that it acts in sealing manner under compressive stress upon engagement of the sliding fins (37) in the peripheral grooves of the insulating tube.

**Revendications**

1. Raccord pour tubes isolants munis de nervures périphériques, présentant une pièce tubulaire en matière plastique possédant à une extrémité un manchon fileté et, à l'autre extrémité, un manchon (1, 10, 30) récepteur du tube isolant (5, 19, 33) et supportant un élément d'arrêt (6, 7, 8 ; 15 ; 36) dans un évidement de la paroi, caractérisé par le fait que l'élément d'arrêt (6, 7, 8 ; 15 ; 36) comporte au moins une saillie (8 ; 20 ; 37) destinée à être engagée dans une gorge circonférentielle du tube isolant, et peut être pressé manuellement jusqu'à une position efficace dans laquelle sa saillie pénètre radialement dans le perçage du manchon et est maintenue en place par un assemblage mécanique ou par conformation ne pouvant être dissocié qu'au moyen d'un outil.

2. Raccord selon la revendication 1, caractérisé par le fait que l'élément d'arrêt consiste en un bouton-pression (6, 7, 8) pouvant être amené, par pression radiale vers l'intérieur, d'une position inefficace dans laquelle un tenon (8), situé à l'extrémité d'une cheville (7) prévue sur une plaquette de pression (6), se trouve à l'intérieur de l'épaisseur de la paroi du manchon récepteur (1), jusqu'à sa position efficace dans laquelle il est retenu mécaniquement contre la plaquette de pression (6) par des tétons de coincement (6a).

3. Raccord selon la revendication 2, caractérisé par le fait que le bouton-pression (6, 7, 8), lorsqu'il occupe sa position inefficace, est empêché de tomber par un collet (7a) qui est prévu sur la cheville (7) et emprisonne par en dessous une lèvre en débordement (3a) du perçage de la paroi du manchon recevant le bouton-pression.

4. Raccord selon la revendication 1, caractérisé par le fait que l'élément d'arrêt consiste en un bras curviligne d'arrêt (15) qui est monté à pivotement dans un évidement périphérique (11, 11a) du manchon récepteur (10, 10a) et qui peut être amené par poussée, autour de sa zone de portée (14), de sa position inefficace à sa position efficace dans laquelle des nervures périphériques (20), prévues à la face interne dudit bras, pénètrent dans la largeur interne du manchon récepteur.

5. Raccord selon la revendication 4, caractérisé par le fait que, dans la position efficace du bras d'arrêt (15), la zone de pression (15b) de ce bras, munie des nervures (20), emprisonne par en dessous au moyen d'un gradin (17b) une languette (13) prévue sur le manchon récepteur, en étant ainsi verrouillée dans cette position.

6. Raccord selon la revendication 1, caractérisé par le fait que l'élément d'arrêt consiste en un coulisseau (36) en matière plastique, doté intérieurement de nervures longitudinales (37) et pouvant être inséré tangentiellement à la main dans un évidement (32) pratiqué dans la paroi du manchon récepteur (30) ; et, dans sa position efficace insérée, les nervures (37) s'engagent dans la largeur interne dudit manchon récepteur (30) tandis qu'une protubérance saillante (38) dudit coulisseau (36), accessible par un orifice (32a) ménagé dans la paroi dudit manchon récepteur, n'autorise une extraction de ce coulisseau hors de l'évidement (32) de la paroi qu'au moyen d'un outil.

7. Raccord selon la revendication 6, caractérisé par le fait qu'il est prévu, à l'extrémité interne du perçage du manchon récepteur (30), une gorge circonférentielle (34) dans laquelle est en appui une bague d'étanchement (35), dont la longueur axiale est choisie de façon qu'elle assure une étanchéité par contrainte de pression lorsque les nervures (37) du coulisseau pénètrent dans des gorges périphériques du tube isolant.

Fig.1

Fig.2

Fig.3

Fig. 4

Fig. 5

Fig. 6

Fig. 7

0 073 892

Fig. 8

Fig. 9

Fig. 10

Fig. 11

Fig. 12

Fig. 13